# EUROPÄISCHE PATENTSCHRIFT

(11) **EP 4 216 525 B1**
(45) Veröffentlichungstag und Bekanntmachung des Hinweises auf die Patenterteilung: **11.12.2024**
(21) Anmeldenummer: 22152514.0
(22) Anmeldetag: 20.01.2022
(51) Int. Cl.: H04M 3/42

(54) **VERFAHREN ZUR VERWENDUNG VON SOWOHL EINER PRIMÄREN TELEFONNUMMER ALS AUCH EINER SEKUNDÄREN TELEFONNUMMER BEZÜGLICH EINES TEILNEHMERS EINES TELEKOMMUNIKATIONSNETZES, TELEKOMMUNIKATIONSNETZ ODER SYSTEM, ANRUFER-IDENTITÄTS-EINHEIT ODER -FUNKTIONALITÄT, COMPUTERPROGRAMM UND COMPUTERLESBARES MEDIUM**
METHOD FOR USING BOTH A PRIMARY TELEPHONE NUMBER AND A SECONDARY TELEPHONE NUMBER WITH RESPECT TO A SUBSCRIBER OF A TELECOMMUNICATION NETWORK, TELECOMMUNICATION NETWORK OR SYSTEM, CALLER IDENTITY UNIT OR FUNCTIONALITY, COMPUTER PROGRAM AND COMPUTER READABLE MEDIUM
PROCÉDÉ D'UTILISATION D'UN NUMÉRO DE TÉLÉPHONE PRIMAIRE ET D'UN NUMÉRO DE TÉLÉPHONE SECONDAIRE PAR RAPPORT À UN ABONNÉ D'UN RÉSEAU DE TÉLÉCOMMUNICATION, RÉSEAU OU SYSTÈME DE TÉLÉCOMMUNICATION, UNITÉ OU FONCTIONNALITÉ D'IDENTIFICATION DE L'APPELANT, PROGRAMME INFORMATIQUE ET SUPPORT LISIBLE PAR ORDINATEUR

(43) Veröffentlichungstag der Anmeldung: 26.07.2023
(73) Patentinhaber: Deutsche Telekom AG, 53113 Bonn (DE)
(72) Erfinder: MINOW, Jascha, 64625 Bensheim (DE); EL-MALLOUKI, Said, 56329 St. Goar (DE); JAHN, Carl, 65191 Wiesbaden (DE)
(74) Vertreter: Schwöbel, Thilo K.

(56) Entgegenhaltungen:
- EP-A1- 3 211 872
- US-A1- 2009 274 284
- US-A1- 2014 274 008
- US-A1- 2015 271 731

## Beschreibung

### Stand der Technik

Bei vorbekannten Telekommunikationsnetzen ist es üblich, dass einem Teilnehmer eine Telefonnummer fest zugeordnet ist. Es ist ferner üblich, dass diese Telefonnummer auch anderen Teilnehmern bekannt ist bzw. sogar bekannt sein muss, wenn anderen Teilnehmer (oder weiteren Teilnehmer) den betrachteten Teilnehmer telefonisch (oder auf anderem Wege, etwa unter Nutzung einer Nachrichtenanwendung, Chatanwendung oder dergleichen) erreichen möchten.

Bei der Betrachtung von Festnetz-Telekommunikationsnetzen bzw. Festnetzanschlüssen ist eine solche Funktionsweise historisch gewachsen und damit zusammenhängend, dass ursprünglich in der Regel eine solche zugeordnete Telefonnummer bzw. Festnetztelefonnummer entweder einem geographischen Ort zugeordnet war oder aber zumindest teilweise einen Bezug zu einem geographischen Ort oder einem Gebiet hatte. Bei der Betrachtung von Mobilfunknetzen bzw. Mobilfunkkommunikationsnetzen sind zwar die Teilnehmer örtlich mobil, dennoch ist einem Teilnehmer oder einer Subskription immer eine Identifikationsinformation (oder Erreichbarkeitsinformation) zur Identifikation innerhalb des betrachteten Telekommunikationsnetzes (bzw. Mobilfunkkommunikationsnetzes) zugeordnet (in der Regel in Form eines UICC-Moduls (universal integrated circuit card bzw. SIM-Modul (subscriber identity module), SIM-Karte oder USIM-Karte) oder einer eSIM ("eingebautes Teilnehmer-Identitätsmodul" bzw. "embedded subscriber identity module")), welche an andere Teilnehmer zwingend kommuniziert werden muss, damit der betrachtete Teilnehmer von diesen anderen Teilnehmern erreichbar ist.

Diese technische Funktionsweise bei bekannten Telekommunikationsnetzen ist in der Regel grundsätzlich in dieser Art realisiert.

Dies gilt prinzipiell auch für die Situation, dass beispielsweise (insbesondere bei Teilnehmern von Mobilfunkkommunikationsnetzen) mehr als eine Subskription bzw. mehr als eine Identifikationsinformation zur Identifikation innerhalb entweder eines einzigen Telekommunikationsnetzes oder auch eine Subskription bzw. Identifikationsinformation innerhalb des Telekommunikationsnetzes und wenigstens eine weitere Subskription bzw. Identifikationsinformation innerhalb eines weiteren Telekommunikationsnetzes einem Telekommunikationsendgerät zugeordnet ist: Für jede dieser zwei oder mehr Subskriptionen bzw. Identifikationsinformationen gilt in der Regel (jeweils individuell), dass die jeweiligen Telefonnummern auch anderen Teilnehmern bekannt sind bzw. sogar bekannt sein müssen, wenn solche anderen Teilnehmer (bzw. weiteren Teilnehmer) den betrachteten Teilnehmer telefonisch (oder auf anderem Wege, etwa unter Nutzung einer Nachrichtenanwendung, Chatanwendung oder dergleichen) erreichen möchten.

Jedoch sind solche Telefonnummern eine persönliche Angelegenheit und unterliegen dem Datenschutz, weshalb die Weitergabe von Telefonnummern bzw. von Identifikationsinformationen zu Subskriptionen das Datenschutzniveau in nachteiliger Weise absenkt.

EP3211872 offenbart einen Telefonverbindungsaufbau nach dem Stand der Technik, bei dem die Vertraulichkeit der Haupttelefonnummer durch die Verwendung von Sekundär-/Aliasnummern gewahrt bleibt.

### Offenbarung der Erfindung

Der Erfindung liegt die Aufgabe zugrunde, ein Verfahren zur Verwendung von sowohl einer primären Telefonnummer als auch einer sekundären Telefonnummer bezüglich eines Teilnehmers eines Telekommunikationsnetzes bereitzustellen, wobei mittels des Telekommunikationsnetzes eine Kommunikationsverbindung zwischen dem Teilnehmer und einem weiteren Teilnehmer herstellbar ist, wobei es das Verfahren in vergleichsweise einfacher und effizienter Weise ermöglicht, das Datenschutzniveau zu erhöhen.

Die Aufgabe wird erfindungsgemäß gelöst durch ein Verfahren nach Anspruch 1.

Es ist dadurch gemäß der vorliegenden Erfindung in vorteilhafter Weise möglich, dass in vergleichsweise einfacher Art und Weise vermieden werden kann, dass es in zwingender Weise zu einer Weitergabe von Telefonnummern bzw. von Identifikationsinformationen zu Subskriptionen kommt, damit Kommunikation zwischen dem Teilnehmer und dem weiteren Teilnehmer ermöglicht wird.

Jeder Telefonanschluss, ob Mobil- oder Festnetzanschluss, hat generell immer eine dedizierte Telefonnummer unter der dieser Anschluss erreicht werden kann. Im Fall von Mobilfunknetzen wird diese Telefonnummer MSISDN (Mobile Subscriber Integrated Services Digital Network Number) genannt und entspricht einem Mapping der Telefonnummer auf die entsprechende SIM Karte bzw. darauf enthaltener und eineindeutiger IMSI (International Mobile Subscriber Identity).

Es ist bei Telekommunikationsnetzen (etwa bereits mit der Einführung von ISDN Festnetzanschlüssen) allgemein bekannt, zu einem Telefonanschluss mehrere Nummern zu buchen, um diese gegebenenfalls in verschiedenen Kreisen von Teilnehmern mitzuteilen, beispielsweise eine berufliche Telefonnummer und eine private Telefonnummer; so war es möglich, die Anliegen entsprechend zu trennen. In Mobilfunkkommunikationsnetzen ist dies mit der MSIDN zwar prinzipiell ebenfalls möglich, jedoch wird dies nur rudimentär eingesetzt; beispielsweise ist es zwar möglich, einem Mobilfunkteilnehmer eine Festnetznummer zusätzlich zuweisen, jedoch wird in der Regel als Caller ID (CID) Telefonnummer (d.h. als bei einem angerufenen weiteren Teilnehmer angezeigte Telefonnummer) nach wie vor die Mobilnummer angezeigt. Somit sind in aller Regel die zugewiesenen Telefonnummern sowohl im Festnetz als auch im Mobilfunk relativ statisch und lassen sich nicht ohne weiteres oder auch auf Initiative des Teilnehmers bzw. Kunden wechseln bzw. ändern.

Daneben sind ferner auch Dienste bekannt, mittels derer virtuelle Telefonnummern vergeben oder erhalten werden können, so dass solche virtuelle Telefonnummern auf einen Festnetz- oder Mobilanschluss eines Teilnehmers gemappt bzw. weitergeleitet werden; jedoch liegt hier ebenfalls der Nachteil vor, dass zwar der Teilnehmer mit einer Mehrzahl oder sogar Vielzahl von Nummern erreicht werden kann, aber bei einem ausgehenden Anruf im Zweifel doch die eigene Basis-Nummer (bzw. primäre Telefonnummer) als Caller ID-Telefonnummer (beim Angerufenen) erscheint, welche nicht preisgegeben werden soll.

Ferner sind weiterhin auch Dienste bekannt, mittels welcher die eigene Rufnummer (des Teilnehmers) als Caller ID-Telefonnummer verbergen und durch eine andere Nummer ersetzen lässt; jedoch erlaubt dies lediglich eine Anonymisierung der angezeigten Telefonnummer des Anrufers (Teilnehmers), ein Rückruf auf dieser Nummer, welche als Caller ID angezeigt wird, ist jedoch nicht sinnvoll funktional möglich, weil die anzeigte Caller ID Telefonnummer jedenfalls nicht dem (anrufenden) Teilnehmer zugeordnet ist (d.h. entweder ist die Telefonnummer gar keinem Teilnehmer zugeordnet oder es wird ein beliebiger anderer, unbeteiligter Teilnehmer angerufen).

Jedoch sind Telefonnummern ein datenschutzrelevantes persönliches Merkmal, analog zu anderen persönlichen Informationen, wie ein Geburtsdatum oder eine Anschrift. Mit diesen Informationen lassen sich gegebenenfalls Identitäten stehlen und vortäuschen, um kriminelle oder anderweitig ungewünschte Aktivitäten, wie Stalking, etc. durchzuführen.

Der Datenschutz ist bereits ein relevantes Problem, daneben jedoch auch die Trennung von beruflichen, familiären und freizeitlichen Aktivitäten. Hinzu kommen noch Online Aktivitäten, bei denen aus den verschiedensten Gründen eine Telefonnummer anzugeben ist bzw. diese angefragt wird, um einen Dienst nutzen zu können; ein wichtiges Beispiel hierfür ist sicherlich die 2-Faktor Authentifizierung mit Hilfe einer Nachricht (insbesondere SMS-Nachricht, short message system-Nachricht) an eine Mobiltelefonnummer, über welche ein Teilnehmer eine solche Nachricht erhalten kann.

Erfindungsgemäß ist es in vorteilhafter Weise möglich, dass für viele bzw. alle solcher Aktivitäten separate Telefonnummern verwendet werden können, ohne dass für jede einzelne solcher unterschiedlicher Aktivitäten separate Festnetzverträge (bzw. Festnetzanschlüsse) oder Mobilfunkverträge (d.h. in der Regel eine Vielzahl von SIM-Karten) erforderlich wären (mittels welcher herkömmlicherweise jeweils im Wesentlichen eine einzige Telefonnummer (jedenfalls in der Regel ausgehend) verwendet werden könnte).

Somit ist es erfindungsgemäß vorteilhaft möglich, eine größere Kontrolle bei der Weitergabe der eigenen Telefonnummer auszuüben. Auch ist es erfindungsgemäß möglich eine weitergegebene Telefonnummer zurückzuziehen, etwa im Falle von Missbrauch (ohne dazu gezwungen zu sein, gleich einen Wechsel der Telefonnummer herbeizuführen, was wiederum dazu führen würde, dass allen privaten und geschäftlichen Kontakten die neue Telefonnummer mitgeteilt werden müsste und, falls dies im Einzelfall vergessen werden würde, dass die betreffende Person keine Möglichkeit hätte, den Teilnehmer über die bisherige Telefonnummer telefonisch zu erreichen).

Erfindungsgemäß ist es somit vorgesehen, dass ein Teilnehmer - neben der Verwendung einer primären Telefonnummer (d.h. der herkömmlicherweise bekannten mehr oder weniger einzigen dem Teilnehmer zugeordneten Telefonnummer) - auch eine sekundäre Telefonnummer, jedoch bevorzugt eine Mehrzahl oder eine Vielzahl von sekundären Telefonnummern zu nutzen in der Lage ist, d.h. zur Nutzung innerhalb oder als Teilnehmer eines Telekommunikationsnetzes zur Herstellung, mittels welchem (gegebenenfalls unter Nutzung weiterer Telekommunikationsnetze) eine Kommunikationsverbindung zwischen dem Teilnehmer und einem weiteren Teilnehmer herstellbar ist.

Erfindungsgemäß weist das Telekommunikationsnetz eine Anrufer-Identitäts-Einheit oder -Funktionalität auf oder ist damit verbunden oder hat darauf Zugriff.

Erfindungsgemäß weist nun das Verfahren zur Herstellung der Kommunikationsverbindung zwischen dem Teilnehmer und dem weiteren Teilnehmer die Schritte auf, dass zwischen dem Teilnehmer und der Anrufer-Identitäts-Einheit oder - Funktionalität die primäre Telefonnummer verwendet wird und dass zwischen dem weiteren Teilnehmer und der Anrufer-Identitäts-Einheit oder -Funktionalität die sekundäre Telefonnummer verwendet wird.

Hierdurch wird die primäre Telefonnummer des Teilnehmers lediglich zwischen diesem selbst und der Anrufer-Identitäts-Einheit oder -Funktionalität verwendet (bzw. muss lediglich in diesem Bereich verwendet werden). Zwischen der Anrufer-Identitäts-Einheit oder -Funktionalität (des Telekommunikationsnetzes bzw. auch eines weiteren Telekommunikationsnetzes) und dem weiteren Teilnehmer wird erfindungsgemäß die sekundäre (jedoch (in der Richtung vom weiteren Teilnehmer zum Teilnehmer) eindeutig dem Teilnehmer zugeordnete) Telefonnummer verwendet, was dazu führt, dass der weitere Teilnehmer den Teilnehmer unter Verwendung der sekundären Telefonnummer beispielsweise zurückzurufen in der Lage ist.

Gemäß einer bevorzugten Ausführungsform der vorliegenden Erfindung ist es bevorzugt vorgesehen, dass die Herstellung der Kommunikationsverbindung zwischen dem Teilnehmer und dem weiteren Teilnehmer dadurch erfolgt, dass ein Rufaufbau seitens des Teilnehmers erfolgt oder seitens des Teilnehmers angestoßen wird, wobei zunächst - während des ersten Schritts - die primäre Telefonnummer verwendet wird und wobei zeitlich nachfolgend - während des zweiten Schritts - die sekundäre Telefonnummer verwendet wird, wobei insbesondere die sekundäre Telefonnummer als gegenüber dem weiteren Teilnehmer verwendeten Caller-ID des Teilnehmers verwendet wird.

Gemäß einer weiteren Ausführungsform der vorliegenden Erfindung ist es bevorzugt vorgesehen, dass die Herstellung der Kommunikationsverbindung zwischen dem Teilnehmer und dem weiteren Teilnehmer dadurch erfolgt, dass ein Rufaufbau seitens des weiteren Teilnehmers erfolgt oder seitens des weiteren Teilnehmers angestoßen wird, wobei zunächst - während des zweiten Schritts - die sekundäre Telefonnummer verwendet wird und wobei zeitlich nachfolgend - während des ersten Schritts - die primäre Telefonnummer verwendet wird.

Durch die bei beiden Ausführungsformen vorliegende ausschließliche Verwendung der sekundären Telefonnummer gegenüber dem weiteren Teilnehmer ist es erfindungsgemäß vorteilhaft möglich, dass in vergleichsweise einfacher Art und Weise der weitere Teilnehmer keine Kenntnis der primären Telefonnummer des Teilnehmers erhält bzw. bei der Anzeige der Caller-ID des Teilnehmers lediglich die sekundäre Telefonnummer angezeigt erhält, jedoch dennoch jederzeit die Möglichkeit erhält, den Teilnehmer unter Nutzung der sekundären Telefonnummer zu erreichen, d.h. durch Rufaufbau seitens des weiteren Teilnehmers unter Verwendung der sekundären Telefonnummer.

Gemäß einer weiteren Ausführungsform der vorliegenden Erfindung ist es bevorzugt vorgesehen, dass die primäre Telefonnummer und/oder die sekundäre Telefonnummer eine MSISDN-Telefonnummer ist oder MSISDN-Telefonnummern sind.

Hierdurch ist es erfindungsgemäß insbesondere vorteilhaft möglich, dass das erfindungsgemäße Verfahren einfach und effizient durchführbar ist.

Gemäß einer weiteren Ausführungsform der vorliegenden Erfindung ist es bevorzugt vorgesehen, dass die primäre und sekundäre Telefonnummer einem dem Teilnehmer zugeordneten Telekommunikationsendgerät oder einer Subskription des Teilnehmers zugeordnet sind,
wobei insbesondere dem weiteren Teilnehmer die primäre Telefonnummer nicht weitergeleitet wird und insbesondere nicht bekannt ist.

Hierdurch ist es gemäß einer solchen Ausführungsform der Erfindung vorteilhaft möglich, dass die primäre Telefonnummer vor einer Weitergabe geschützt ist.

Gemäß einer weiteren Ausführungsform der vorliegenden Erfindung ist es bevorzugt vorgesehen, dass die Anrufer-Identitäts-Einheit oder -Funktionalität hinsichtlich des weiteren Teilnehmers einen Kontaktebucheintrag derart aufweist, dass bei einer vom Teilnehmer unter Verwendung der primären Telefonnummer an den weiteren Teilnehmer ausgehenden Kommunikationsverbindung anstelle der primären Telefonnummer die sekundäre Telefonnummer verwendet wird und/oder dass bei einer vom weiteren Teilnehmer unter Verwendung der sekundären Telefonnummer an den Teilnehmer eingehenden Kommunikationsverbindung die Kommunikationsverbindung mit dem Teilnehmer hergestellt wird.

Hierdurch ist es gemäß einer solchen Ausführungsform der Erfindung vorteilhaft möglich, dass eine für den Teilnehmer komfortable Nutzung des erfindungsgemäßen Verfahrens, insbesondere ohne zusätzlichen oder zumindest ohne erheblichen zusätzlichen Aufwand, möglich ist.

Gemäß einer weiteren Ausführungsform der vorliegenden Erfindung ist es bevorzugt vorgesehen, dass der Kontaktebucheintrag automatisch erstellt wird oder manuell generierbar ist, wobei insbesondere eine Mehrzahl von verschiedenen sekundären Telefonnummern für unterschiedliche weitere Teilnehmer nutzbar sind.

Hierdurch ist es gemäß einer solchen Ausführungsform der Erfindung vorteilhaft möglich, dass wiederum das erfindungsgemäße Verfahren einfach und effektive nutzbar ist und ferner dass eine Mehrzahl von sekundären Telefonnummern verfügbar (und dem Teilnehmer zugeordnet) sind.

Gemäß einer weiteren Ausführungsform der vorliegenden Erfindung ist es bevorzugt vorgesehen, dass der Kontaktebucheintrag und/oder die sekundäre Telefonnummer
-- eine zeitlich begrenzte Gültigkeitsdauer aufweist und/oder
-- auf Initiative des Teilnehmers und/oder auf Initiative des Telekommunikationsnetzes ungültig oder in einen inaktiven Zustand versetzt wird oder für einen bestimmten, insbesondere sich wiederholenden, Zeitraum ungültig oder in einen inaktiven Zustand versetzt wird und/oder
-- für Kommunikationsverbindungen unter Nutzung von weiteren Telekommunikationsnetzen als das Telekommunikationsnetz, insbesondere für Roaming-Situationen, nutzbar ist oder alternativ nicht nutzbar ist und/oder
-- lediglich für Kommunikationsverbindungen betreffend Sprachverbindungen oder aber lediglich für Kommunikationsverbindungen betreffend Datenverbindungen oder für Kommunikationsverbindungen betreffend sowohl Sprach- als auch Datenverbindungen verwendbar ist oder für Kommunikationsverbindungen betreffend oder nutzend eine bestimmte Anwendung oder Gruppe von Anwendungen verwendbar ist und/oder
-- auf die Nutzung durch den weiteren Teilnehmer oder aber durch den weiteren Teilnehmer und zusätzlich einen oder eine Mehrzahl anderer weiterer Teilnehmer, insbesondere eine begrenzte Anzahl anderer weiterer Teilnehmer, eingeschränkt ist und/oder
-- auf Initiative des Teilnehmers und/oder auf Initiative des Telekommunikationsnetzes ungültig oder in einen inaktiven Zustand für die Nutzung durch den weiteren Teilnehmer oder einen oder eine Mehrzahl anderer weiterer Teilnehmer versetzt wird oder für einen bestimmten, insbesondere sich wiederholenden, Zeitraum ungültig oder in einen inaktiven Zustand versetzt wird und/oder
-- auf Initiative des Teilnehmers und/oder auf Initiative des Telekommunikationsnetzes trotz ungültiger oder in einen inaktiven Zustand für die Nutzung durch den weiteren Teilnehmer oder einen oder eine Mehrzahl anderer weiterer Teilnehmer versetzter sekundärer Telefonnummer oder korrespondierendem Kontaktebucheintrags diese für wenigstens einen bestimmten weiteren Teilnehmer dennoch nutzbar ist.

Gemäß einer weiteren Ausführungsform der vorliegenden Erfindung ist es bevorzugt vorgesehen, dass die primäre Telefonnummer dem Teilnehmer oder einem Telekommunikationsendgerät aufgrund einer Subskription zugeordnet ist, wobei die primäre Telefonnummer eine dem Telekommunikationsendgerät und/oder der Subskription zugeordnete MSISDN-Telefonnummer ist.

Des Weiteren wird die Aufgabe gelöst durch ein Telekommunikationsnetz oder ein System nach Anspruch 7.

Es ist dadurch gemäß der vorliegenden Erfindung in vorteilhafter Weise möglich, ein zum erfindungsgemäßen Verfahren korrespondierendes erfindungsgemäßes Telekommunikationsnetz oder System bereitzustellen.

Die Aufgabe wird ferner gelöst durch eine Anrufer-Identitäts-Einheit oder - Funktionalität zur Verwendung in einem erfindungsgemäßen Telekommunikationsnetz oder System.

Des Weiteren wird die Ausgabe gelöst durch ein Computerprogramm umfassend Befehle, mit deren Hilfe die Schritte eines erfindungsgemäßen Verfahrens durchführbar sind, wenn das Computerprogramm auf einer programmierbaren Einrichtung, insbesondere auf einem Netzknoten des Telekommunikationsnetzes oder einer Anrufer-Identitäts-Einheit oder -Funktionalität, ausgeführt wird.

Des Weiteren wird die Aufgabe gelöst durch ein computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das erfindungsgemäße Computerprogramm speichert oder überträgt oder wobei das computerlesbare Medium oder das Datenträgersignal den auf einer programmierbaren Einrichtung, insbesondere auf einem Netzknoten des Telekommunikationsnetzes oder einer Anrufer-Identitäts-Einheit oder - Funktionalität, auszuführenden Teil des erfindungsgemäßen Computerprogramms speichert oder überträgt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt schematisch ein Telekommunikationsnetz mit einem Teilnehmer und einem weiteren Teilnehmer, wobei das Telekommunikationsnetz eine Anrufer-Identitäts-Einheit oder -Funktionalität umfasst.
- **Figur 2**: zeigt schematisch eine Detaildarstellung der Anrufer-Identitäts-Einheit oder-Funktionalität.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird, wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe erste, zweite, dritte und dergleichen in der Beschreibung und in den Ansprüchen zur Unterscheidung zwischen ähnlichen Elementen und nicht unbedingt zur Beschreibung einer sequenziellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

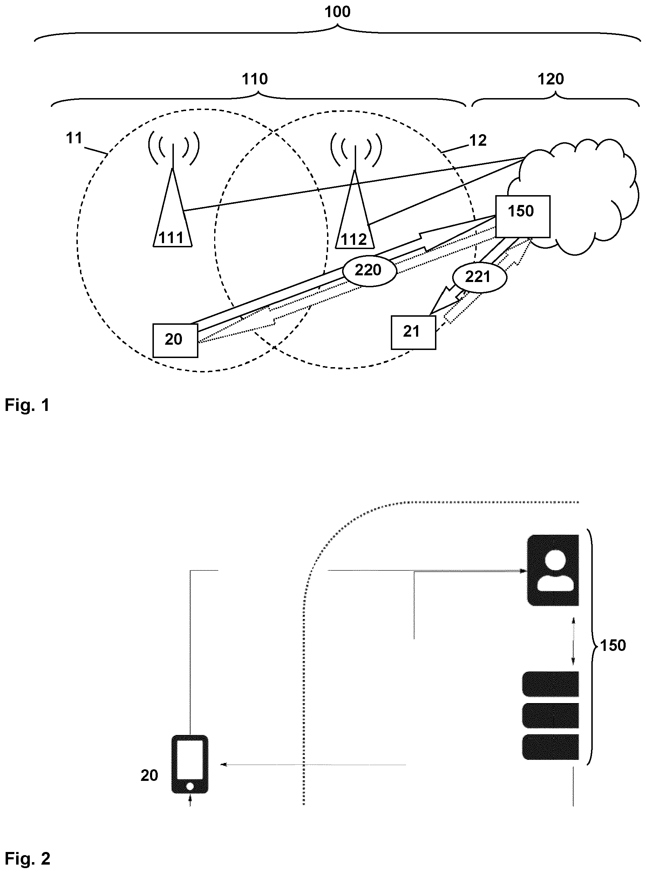

In Figur 1 ist schematisch ein Telekommunikationsnetz 100 mit einem Teilnehmer 20 und einem weiteren Teilnehmer 21 dargestellt. In der beispielhaften Darstellung gemäß Figur 1 ist das Telekommunikationsnetz 100 als Mobilfunkkommunikationsnetz dargestellt, umfassend ein Zugangsnetz 110 und ein Kernnetz 120, wobei das Zugangsnetz eine erste Basisstationseinrichtung 111 und eine zweite Basisstationseinrichtung 112 aufweist. Jede der Basisstationseinrichtungen 111, 112 weist, schematisch mittels eines gestrichelt dargestellten Kreises angedeutet, einen Funkabdeckungsbereich auf bzw. bedient oder versorgt diesen, wobei die erste Basisstationseinrichtung 111 einen ersten Funkabdeckungsbereich 11 und die zweite Basisstationseinrichtung 112 einen zweiten Funkabdeckungsbereich 12 versorgt bzw. abdeckt. Das Telekommunikationsnetz 100 bzw. insbesondere das Kernnetz 120, weist im in Figur 1 dargestellten Beispiel eine Anrufer-Identitäts-Einheit oder -Funktionalität 150 auf bzw. umfasst diese. Alternativ dazu, dass das Telekommunikationsnetz 100 die Anrufer-Identitäts-Einheit oder -Funktionalität 150 aufweist, kann es erfindungsgemäß auch vorgesehen sein, dass die Anrufer-Identitäts-Einheit oder -Funktionalität 150 nicht Teil des Telekommunikationsnetzes 100 ist, sondern das Telekommunikationsnetz 100 lediglich mit der Anrufer-Identitäts-Einheit oder -Funktionalität 150 verbunden ist oder auf die Anrufer-Identitäts-Einheit oder -Funktionalität 150 Zugriff hat.

Erfindungsgemäß ist es vorgesehen, dass dem Teilnehmer 20 (des Telekommunikationsnetzes 100, d.h. insbesondere ein Festnetzteilnehmer oder ein Mobilfunkteilnehmer, d.h. beispielsweise ein Telekommunikationsendgerät eines Nutzers des Telekommunikationsnetzes 100) sowohl eine primäre Telefonnummer 220 als auch eine sekundäre Telefonnummer 221 zugeordnet ist und mittels des Telekommunikationsnetzes 100 eine Kommunikationsverbindung zwischen dem Teilnehmer 20 und einem weiteren Teilnehmer 21 herstellbar ist, insbesondere unter Nutzung von (insbesondere gleichzeitig) sowohl der primären Telefonnummer 220 als auch der sekundären Telefonnummer.
Hierbei wird gemäß der vorliegenden Erfindung vorgeschlagen, dass (zur Herstellung der Kommunikationsverbindung zwischen dem Teilnehmer 20 und einem weiteren Teilnehmer 21) in einem ersten Schritt zwischen dem Teilnehmer 20 und der Anrufer-Identitäts-Einheit oder -Funktionalität 150 die primäre Telefonnummer 220 verwendet und in einem zweiten Schritt zwischen dem weiteren Teilnehmer 21 und der Anrufer-Identitäts-Einheit oder -Funktionalität 150 die sekundäre Telefonnummer 221 verwendet wird. Hierbei wird bei einem (aus Sicht des Teilnehmers 20) ausgehenden Ruf bzw. einer ausgehender Kommunikationsverbindung (etwa ein Telefonanruf oder aber auch eine Nachricht) zum weiteren Teilnehmer 21 in der Regel zunächst der erste Schritt und anschließend der zweite Schritt ausgeführt, währenddem bei einem (aus Sicht des Teilnehmers 20) vom weiteren Teilnehmer 21eingehenden Ruf bzw. einer eingehenden Kommunikationsverbindung (etwa ein Telefonanruf oder eine Nachricht) in der Regel zunächst der zweite Schritt und anschließend der erste Schritt ausgeführt wird. Mit anderen Worten erfolgt die Herstellung der Kommunikationsverbindung zwischen dem Teilnehmer 20 und dem weiteren Teilnehmer 21 dadurch, dass ein Rufaufbau seitens des Teilnehmers 20 erfolgt oder seitens des Teilnehmers 20 angestoßen wird (ausgehender Ruf aus Sicht des Teilnehmers 20), wobei zunächst - während des ersten Schritts - die primäre Telefonnummer 220 verwendet wird und wobei zeitlich nachfolgend - während des zweiten Schritts - die sekundäre Telefonnummer 221 verwendet wird, wobei insbesondere die sekundäre Telefonnummer 221 als gegenüber dem weiteren Teilnehmer 21 verwendeten Caller-ID des Teilnehmers 20 verwendet wird.

Analog erfolgt die Herstellung der Kommunikationsverbindung zwischen dem Teilnehmer 20 und dem weiteren Teilnehmer 21 dadurch, dass ein Rufaufbau seitens des weiteren Teilnehmers 21 erfolgt oder seitens des weiteren Teilnehmers 21 angestoßen wird (eingehender Ruf aus Sicht des Teilnehmers 20), wobei zunächst - während des zweiten Schritts - die sekundäre Telefonnummer 221 verwendet wird und wobei zeitlich nachfolgend - während des ersten Schritts - die primäre Telefonnummer 220 verwendet wird.

Sowohl der beim Teilnehmer 20 eingehende Ruf als auch der vom Teilnehmer 20 ausgehende Ruf ist in Figur 1 mittels Pfeilen zwischen den Teilnehmern 20, 21 und der Anrufer-Identitäts-Einheit oder -Funktionalität 150 dargestellt bzw. angedeutet, wobei der vom Teilnehmer 20 ausgehende Ruf mit durchgezogener Linie gezeichneten Pfeilen dargestellt ist und der beim Teilnehmer 20 eingehende Ruf mit punktierter Linie gezeichneten Pfeilen dargestellt ist.

Es kann somit erfindungsgemäß insbesondere sichergestellt werden, dass dem weiteren Teilnehmer 21 jedenfalls die primäre Telefonnummer 220 nicht weitergeleitet wird und insbesondere nicht bekannt ist, jedoch dennoch in Form der sekundären Telefonnummer 221 eine Erreichbarkeit des Teilnehmers 20 durch den weiteren Teilnehmer 21 gewährleistet ist.

Insbesondere ist erfindungsgemäß die primäre und sekundäre Telefonnummer 220, 221 einem dem Teilnehmer zugeordneten Telekommunikationsendgerät oder einer Subskription des Teilnehmers 20 zugeordnet.

Erfindungsgemäß ist insbesondere bevorzugt vorgesehen, dass die Anrufer-Identitäts-Einheit oder -Funktionalität 150 dem Teilnehmer 20 zugeordnet ist und hinsichtlich des weiteren Teilnehmers 21 einen Kontaktebucheintrag derart aufweist, dass bei einer vom Teilnehmer 20 unter Verwendung der primären Telefonnummer 220 an den weiteren Teilnehmer 21 ausgehenden Kommunikationsverbindung anstelle der primären Telefonnummer 220 die sekundäre Telefonnummer 221 verwendet wird und/oder dass bei einer vom weiteren Teilnehmer 21 unter Verwendung der sekundären Telefonnummer 221 an den Teilnehmer 20 eingehenden Kommunikationsverbindung die Kommunikationsverbindung mit dem Teilnehmer 20 hergestellt wird. Mittels der Anrufer-Identitäts-Einheit oder -Funktionalität 150 und insbesondere dem Kontaktebucheintrag (bezüglich des weiteren Teilnehmers 21) ist es somit vergleichsweise einfach möglich, die Umsetzung von der Verwendung der primären Telefonnummer 220 zwischen dem Teilnehmer 20 und der Anrufer-Identitäts-Einheit oder -Funktionalität 150 einerseits zur Verwendung der sekundären Telefonnummer 221 zwischen der Anrufer-Identitäts-Einheit oder -Funktionalität 150 und dem weiteren Teilnehmer 21 zu bewerkstelligen.

Insbesondere ist es erfindungsgemäß vorgesehen, dass der Kontaktebucheintrag automatisch erstellt wird oder manuell generierbar ist. Insbesondere ist eine Mehrzahl von verschiedenen sekundären Telefonnummern für unterschiedliche weitere Teilnehmer nutzbar; beispielsweise erhält jeder unterschiedliche weitere Teilnehmer jeweils eine andere sekundäre Telefonnummer.

Die Anrufer-Identitäts-Einheit oder -Funktionalität 150 wird im Folgenden auch als Caller ID Enhancement Service (CIDES) bezeichnet und ist in Figur 2 schematisch dargestellt: Bei Anfrage durch einen Teilnehmer 20 (beispielsweise einen SIM Karten-Inhaber) wird durch den Anruf einer (externen) Telefonnummer, welche nicht im Adressbuch des Nutzers (d.h. des ersten Teilnehmers 20, d.h. im Kontaktebuch der Anrufer-Identitäts-Einheit oder -Funktionalität 150 für diesen Teilnehmer 20) gespeichert ist (also einer neuen unbekannte Rufnummer entspricht), durch manuelles Generieren eines neuen Adressbucheintrages (Kontakebucheintrag, welcher mit einer neuen (sekundären) Telefonnummer als Anrufsignalisierungsnummer (Caller ID) verknüpft werden soll) eine neue (insbesondere temporäre und/oder dynamische) sekundäre Telefonnummer (insbesondere eine MSISDN 2) erzeugt und diese einer Datenbank und/oder dem Anrufer-Identitäts-Einheit oder -Funktionalität 150 oder auch dem Home Location Register (HLR) des Mobilfunkbetreibers mitteilt. In dieser Datenbank bzw. in der Anrufer-Identitäts-Einheit oder -Funktionalität 150 erfolgt das Mapping bzw. die Abbildung der (neu generierten) sekundären Telefonnummer (MSISDN 2) des Nutzers (d.h. welche dem Teilnehmer 20 mit Bezug zum weiteren Teilnehmer 21 zugeordnet ist) auf die primäre Telefonnummer 220 des Teilnehmers 20 oder aber auf eine andere Identifikationsinformation des Teilnehmers 20, beispielsweise die IMSI.

Nachfolgend baut dann die Anrufer-Identitäts-Einheit oder -Funktionalität 150 bzw. der CIDES den Anruf zu der unbekannten/neuen Telefonnummer (d.h. zum weiteren Teilnehmer 21) auf und erzeugt mit der neuen MSISDN 2 (d.h. mit der neuen sekundären Telefonnummer 221) die Caller ID (CID), welche dann beim Eingang des Anrufs beim angerufenen Nutzer (d.h. der weitere Teilnehmer) angezeigt wird, typischerweise in dessen Telefondisplay.

Tätigt der weitere Teilnehmer (d.h. User 2) einen Rückruf auf diese im Display angezeigte Telefonnummer, d.h. die angezeigte Caller ID (MSISDN 2 bzw. sekundäre Telefonnummer 221), wird aufgrund der Registrierung dieser sekundäeren Telefonnummer 221 (bzw. MSISDN 2) in der Datenbank oder in der Anrufer-Identitäts-Einheit oder -Funktionalität 150 (bzw. im Carrier HLR) des Telekommunikationsnetzes 100 dieser Anruf korrekt auf die richtige IMSI und damit zur richtigen SIM Karte bzw. zum richtigen Telekommunikationsendgerät oder Mehrzahl von Telekommunikationsendgeräte des Teilnehmers 20 weitergeleitet, d.h. das Telefon des Teilnehmers 20 (User 1) klingelt, und der weitere Teilnehmer 21 (User 2) hat die sekundäre Telefonnummer 221 (MSISDN 2) angerufen.

Insbesondere bei erfolgreichem und beantwortetem Rückruf auf der (dem Teilnehmer 20, d.h. dem User 1, zugeordneten) sekundären Telefonnummer 221 (MSISDN 2), wird diese MSISDN-Nummer mit der Telefonnummer von User 2 (d.h. mit der dem weiteren Teilnehmer 21 zugeordneten (primären oder sekundären) Telefonnummer) im Adressbuch bzw. im Kontaktebuch verknüpft und synchronisiert, damit bei zukünftigen Anrufen (insbesondere in die Richtung von User 1 (Teilnehmer 20) an User 2 (Teilnehmer 21) immer die korrekte MSISDN (hier im Beispiel: MSISDN 2) für einen Anruf bzw. die Übermittlung der Caller ID verwendet wird). Damit bleibt erfindungsgemäß in vorteilhafter Weise die Privatsphäre des Teilnehmers 20 (d.h. von User 1) intakt, da die primäre Telefonnummer 220 (bzw. MSISDN 1) nicht als Caller ID bekannt gemacht wird.

Erfindungsgemäß ist es insbesondere vorgesehen, dass die neue sekundäre Telefonnummer bzw. dynamische MSISDN 2 flexibel gehandhabt werden kann, beispielsweise eine begrenzte Lebensdauer hat, basierend auf z.B. folgenden

Merkmalen:
-- bei Benutzung der (neuen) sekundären Telefonnummer durch eingehende oder ausgehende Anrufe wird die Lebensdauer bzw. die Verfallsdauer jeweils neu gestartet; erfolgt in einem vordefinierten Zeitfenster kein ein- oder ausgehender Anruf unter Nutzung dieser Telefonnummer (d.h. gibt es zwischen dem Teilnehmer 20 und dem weiteren Teilnehmer 21 in diesem Zeitfenster keinen telefonischen Kontakt), verfällt diese Nummer automatisch und ist nicht mehr benutzbar;
-- das vordefinierte Zeitfenster kann ein durch den Nutzer fest definierter Zeitraum sein, in welchem die sekundäre Telefonnummer gültig sein soll;
-- das vordefinierte Zeitfenster kann ein durch den Netzbetreiber fest definierter Zeitraum sein, in welchem die sekundäre Telefonnummer gültig sein soll;
-- die Verwendbarkeit der sekundären Telefonnummer lässt sich durch weitere Parameter und ein entsprechendes Regelwerk wie etwa:
-- Roaming möglich/nicht möglich;
-- Sprachanrufe oder nur Daten-/SMS-Senden/Empfang möglich;
-- Nutzungszeiträume oder geographische Einschränkungen, wie z.B. nur in einem bestimmten geographischen Lokationsbereich gültig (Home Zone, Büro, etc.).

Erfindungsgemäß ist es insbesondere bevorzugt vorgesehen, dass der Kontaktebucheintrag und/oder die sekundäre Telefonnummer 221
-- eine zeitlich begrenzte Gültigkeitsdauer aufweist und/oder
-- auf Initiative des Teilnehmers 20 und/oder auf Initiative des Telekommunikationsnetzes 100 ungültig oder in einen inaktiven Zustand versetzt wird oder für einen bestimmten, insbesondere sich wiederholenden, Zeitraum ungültig oder in einen inaktiven Zustand versetzt wird und/oder
-- für Kommunikationsverbindungen unter Nutzung von weiteren Telekommunikationsnetzen als das Telekommunikationsnetz 100, insbesondere für Roaming-Situationen, nutzbar ist oder alternativ nicht nutzbar ist und/oder
-- lediglich für Kommunikationsverbindungen betreffend Sprachverbindungen oder aber lediglich für Kommunikationsverbindungen betreffend Datenverbindungen oder für Kommunikationsverbindungen betreffend sowohl Sprach- als auch Datenverbindungen verwendbar ist oder für Kommunikationsverbindungen betreffend oder nutzend eine bestimmte Anwendung oder Gruppe von Anwendungen verwendbar ist und/oder
-- auf die Nutzung durch den weiteren Teilnehmer 21 oder aber durch den weiteren Teilnehmer 21 und zusätzlich einen oder eine Mehrzahl anderer weiterer Teilnehmer, insbesondere eine begrenzte Anzahl anderer weiterer Teilnehmer, eingeschränkt ist und/oder
-- auf Initiative des Teilnehmers 20 und/oder auf Initiative des Telekommunikationsnetzes 100 ungültig oder in einen inaktiven Zustand für die Nutzung durch den weiteren Teilnehmer 21 oder einen oder eine Mehrzahl anderer weiterer Teilnehmer versetzt wird oder für einen bestimmten, insbesondere sich wiederholenden, Zeitraum ungültig oder in einen inaktiven Zustand versetzt wird und/oder
-- auf Initiative des Teilnehmers 20 und/oder auf Initiative des Telekommunikationsnetzes 100 trotz ungültiger oder in einen inaktiven Zustand für die Nutzung durch den weiteren Teilnehmer 21 oder einen oder eine Mehrzahl anderer weiterer Teilnehmer versetzter sekundärer Telefonnummer 221 oder korrespondierendem Kontaktebucheintrags diese für wenigstens einen bestimmten weiteren Teilnehmer dennoch nutzbar ist.

Somit ist es erfindungsgemäß vorteilhaft möglich, dass die Anrufer-Identitäts-Einheit oder -Funktionalität 150 bzw. der CIDES auch für weitere technische Merkmale genutzt werden kann, wie beispielsweise:
-- die Erzeugung von MSISDNs mit von vornherein begrenzter Gültigkeit (z.B. 24 Stunden)
-- die Realisierung eines Regelerzeugungsmechanismus (rule engine), um die erlaubte Verwendung von Rufnummern zu definieren, z.B. diese Nummer geht nicht/nur für WhatsApp oder Roaming etc.
-- das Prinzip des Rufnummern-Sperrens wird in die Hand des Nutzers gegeben, um z.B. unerwünschte Anrufe zu unterbinden, ist es möglich die entsprechenden sekundären Telefonnummern (als virtuelle Rufnummern ("MSISDN X")) zu sperren bzw. zu löschen.

Hierdurch ist es erfindungsgemäß insbesondere vorteilhaft möglich, dass
-- der Teilnehmer 20 selbst entscheiden kann, welche Telefonnummer (bzw. welche sekundäre Telefonnummer bzw. auch ob die primäre Telefonnummer) geteilt wird oder werden soll und wie dieser Teilnehmer 20 erreichbar ist, beispielsweise unter einer der jeweiligen sekundären Telefonnummern;
-- die (sekundäre) Telefonnummer (bzw. die sekundären Telefonnummern) kann (bzw. können) jederzeit zurückgezogen werden;
-- mit einem Regelwerk können bestimmte Faktoren bestimmt werden wie die neue Rufnummer erreichbar ist oder nicht;
-- das Routing selbst findet im Telekommunikationsnetz oder in der Cloud statt und beeinflusst nicht den Anrufer oder den Angerufenen.

## Patentansprüche

1. Verfahren zur Verwendung von sowohl einer primären Telefonnummer (220) als auch einer sekundären Telefonnummer (221) bezüglich eines Teilnehmers (20) eines Telekommunikationsnetzes (100), wobei das Telekommunikationsnetz (100) ein Mobilfunkkommunikationsnetz ist und die primäre Telefonnummer (220) und die sekundäre Telefonnummer (221) MSISDN-Telefonnummern sind,
wobei mittels des Telekommunikationsnetzes (100) eine Kommunikationsverbindung zwischen dem Teilnehmer (20) und einem weiteren Teilnehmer (21) herstellbar ist, wobei der Teilnehmer (20) und der weitere Teilnehmer (21) über ein Zugangsnetz (110) des Telekommunikationsnetzes (100) mit einem Kernnetz (120) des Telekommunikationsnetzes (100) verbunden sind,
wobei das Telekommunikationsnetz (100) eine Anrufer-Identitäts-Einheit oder - Funktionalität (150) aufweist oder damit verbunden ist oder darauf Zugriff hat, wobei das Verfahren zur Herstellung einer Kommunikationsverbindung zwischen dem Teilnehmer (20) und dem weiteren Teilnehmer (21) die nachfolgenden Schritte umfasst:
-- in einem ersten Schritt wird zwischen dem Teilnehmer (20) und der Anrufer-Identitäts-Einheit oder -Funktionalität (150) die primäre Telefonnummer (220) verwendet,
-- in einem zweiten Schritt wird zwischen dem weiteren Teilnehmer (21) und der Anrufer-Identitäts-Einheit oder -Funktionalität (150) die sekundäre Telefonnummer (221) verwendet,
wobei die Herstellung der Kommunikationsverbindung zwischen dem Teilnehmer (20) und dem weiteren Teilnehmer (21) dadurch erfolgt, dass ein Rufaufbau seitens des Teilnehmers (20) erfolgt oder seitens des Teilnehmers (20) angestoßen wird, wobei zunächst - während des ersten Schritts - die primäre Telefonnummer (220) verwendet wird und wobei zeitlich nachfolgend - während des zweiten Schritts - die sekundäre Telefonnummer (221) als gegenüber dem weiteren Teilnehmer (21) verwendeten Caller-ID des Teilnehmers (20) verwendet wird, wobei die sekundäre Telefonnummer (221) in einem Home Location Register, HLR, eines Betreibers des Telekommunikationsnetzes (100) registriert wird, wobei bei einem Rückruf des weiteren Teilnehmers (21) eine weitere Kommunikationsverbindung zwischen dem Teilnehmer (20) und dem weiteren Teilnehmer (21) aufgrund der im Home Location Register registrierten sekundären Telefonnummer (221) hergestellt wird.

2. Verfahren nach Anspruch 1, **dadurch gekennzeichnet, dass** die primäre und sekundäre Telefonnummer (220, 221) einem dem Teilnehmer zugeordneten Telekommunikationsendgerät oder einer Subskription des Teilnehmers (20) zugeordnet sind,
wobei insbesondere dem weiteren Teilnehmer (21) die primäre Telefonnummer (220) nicht weitergeleitet wird und insbesondere nicht bekannt ist.

3. Verfahren nach einem der vorhergehenden Ansprüche, **dadurch gekennzeichnet, dass** die Anrufer-Identitäts-Einheit oder -Funktionalität (150) hinsichtlich des weiteren Teilnehmers (21) einen Kontaktebucheintrag derart aufweist, dass bei einer vom Teilnehmer (20) unter Verwendung der primären Telefonnummer (220) an den weiteren Teilnehmer (21) ausgehenden Kommunikationsverbindung anstelle der primären Telefonnummer (220) die sekundäre Telefonnummer (221) verwendet wird und/oder dass bei einer vom weiteren Teilnehmer (21) unter Verwendung der sekundären Telefonnummer (221) an den Teilnehmer (20) eingehenden Kommunikationsverbindung die Kommunikationsverbindung mit dem Teilnehmer (20) hergestellt wird.

4. Verfahren nach einem der vorhergehenden Ansprüche, **dadurch gekennzeichnet, dass** der Kontaktebucheintrag automatisch erstellt wird oder manuell generierbar ist, wobei insbesondere eine Mehrzahl von verschiedenen sekundären Telefonnummern für unterschiedliche weitere Teilnehmer nutzbar sind.

5. Verfahren nach einem der vorhergehenden Ansprüche, **dadurch gekennzeichnet, dass** der Kontaktebucheintrag und/oder die sekundäre Telefonnummer (221)
- - eine zeitlich begrenzte Gültigkeitsdauer aufweist und/oder
- - auf Initiative des Teilnehmers (20) und/oder auf Initiative des Telekommunikationsnetzes (100) ungültig oder in einen inaktiven Zustand versetzt wird oder für einen bestimmten, insbesondere sich wiederholenden, Zeitraum ungültig oder in einen inaktiven Zustand versetzt wird und/oder
- - für Kommunikationsverbindungen unter Nutzung von weiteren Telekommunikationsnetzen als das Telekommunikationsnetz (100), insbesondere für Roaming-Situationen, nutzbar ist oder alternativ nicht nutzbar ist und/oder
- - lediglich für Kommunikationsverbindungen betreffend Sprachverbindungen oder aber lediglich für Kommunikationsverbindungen betreffend Datenverbindungen oder für Kommunikationsverbindungen betreffend sowohl Sprach- als auch Datenverbindungen verwendbar ist oder für Kommunikationsverbindungen betreffend oder nutzend eine bestimmte Anwendung oder Gruppe von Anwendungen verwendbar ist und/oder
- - auf die Nutzung durch den weiteren Teilnehmer (21) oder aber durch den weiteren Teilnehmer (21) und zusätzlich einen oder eine Mehrzahl anderer weiterer Teilnehmer, insbesondere eine begrenzte Anzahl anderer weiterer Teilnehmer, eingeschränkt ist und/oder
- - auf Initiative des Teilnehmers (20) und/oder auf Initiative des Telekommunikationsnetzes (100) ungültig oder in einen inaktiven Zustand für die Nutzung durch den weiteren Teilnehmer (21) oder einen oder eine Mehrzahl anderer weiterer Teilnehmer versetzt wird oder für einen bestimmten, insbesondere sich wiederholenden, Zeitraum ungültig oder in einen inaktiven Zustand versetzt wird und/oder
- - auf Initiative des Teilnehmers (20) und/oder auf Initiative des Telekommunikationsnetzes (100) trotz ungültiger oder in einen inaktiven Zustand für die Nutzung durch den weiteren Teilnehmer (21) oder einen oder eine Mehrzahl anderer weiterer Teilnehmer versetzter sekundärer Telefonnummer (221) oder korrespondierendem Kontaktebucheintrags diese für wenigstens einen bestimmten weiteren Teilnehmer dennoch nutzbar ist.

6. Verfahren nach einem der vorhergehenden Ansprüche, **dadurch gekennzeichnet, dass** die primäre Telefonnummer (220) dem Teilnehmer (20) oder einem Telekommunikationsendgerät aufgrund einer Subskription zugeordnet ist, wobei die primäre Telefonnummer (220) eine dem Telekommunikationsendgerät (20) und/oder der Subskription zugeordnete MSISDN-Telefonnummer ist.

7. Telekommunikationsnetz (100) oder System zur Verwendung von sowohl einer primären Telefonnummer (220) als auch einer sekundären Telefonnummer (221) bezüglich eines Teilnehmers (20) eines Telekommunikationsnetzes (100), wobei das Telekommunikationsnetz (100) ein Mobilfunkkommunikationsnetz ist und die primäre Telefonnummer (220) und die sekundäre Telefonnummer (221) MSISDN-Telefonnummern sind,
wobei mittels des Telekommunikationsnetzes (100) eine Kommunikationsverbindung zwischen dem Teilnehmer (20) und einem weiteren Teilnehmer (21) herstellbar ist, wobei der Teilnehmer (20) und der weitere Teilnehmer (21) über ein Zugangsnetz (110) des Telekommunikationsnetzes (100) mit einem Kernnetz (120) des Telekommunikationsnetzes (100) verbindbar sind,
wobei das Telekommunikationsnetz (100) eine Anrufer-Identitäts-Einheit oder - Funktionalität (150) aufweist oder damit verbunden ist oder darauf Zugriff hat, wobei das Telekommunikationsnetz oder das System zur Herstellung einer Kommunikationsverbindung zwischen dem Teilnehmer (20) und dem weiteren Teilnehmer (21) derart konfiguriert ist, dass:
- - zwischen dem Teilnehmer (20) und der Anrufer-Identitäts-Einheit oder - Funktionalität (150) wird die primäre Telefonnummer (220) verwendet,
- - zwischen dem weiteren Teilnehmer (21) und der Anrufer-Identitäts-Einheit oder -Funktionalität (150) wird die sekundäre Telefonnummer (221) verwendet, wobei das Telekommunikationsnetz (100) derart konfiguriert, dass - falls die Herstellung der Kommunikationsverbindung zwischen dem Teilnehmer (20) und dem weiteren Teilnehmer (21) dadurch erfolgt, dass ein Rufaufbau seitens des Teilnehmers (20) erfolgt oder seitens des Teilnehmers (20) angestoßen wird - zunächst zwischen dem Teilnehmer (20) und der Anrufer-Identitäts-Einheit oder - Funktionalität (150) die primäre Telefonnummer (220) verwendet wird und zeitlich nachfolgend zwischen der Anrufer-Identitäts-Einheit oder -Funktionalität (150) und dem weiteren Teilnehmer (21) die sekundäre Telefonnummer (221) als gegenüber dem weiteren Teilnehmer (21) verwendeten Caller-ID des Teilnehmers (20) verwendet wird, wobei die sekundäre Telefonnummer (221) in einem Home Location Register, HLR, eines Betreibers des Telekommunikationsnetzes (100) registriert ist, so dass bei einem Rückruf des weiteren Teilnehmers (21) eine weitere Kommunikationsverbindung zwischen dem Teilnehmer (20) und dem weiteren Teilnehmer (21) aufgrund der im Home Location Register registrierten sekundären Telefonnummer (221) hergestellt wird.

8. Anrufer-Identitäts-Einheit oder -Funktionalität (150) zur Verwendung in einem Telekommunikationsnetz (100) oder in einem System nach Anspruch 7.

9. Computerprogramm umfassend Befehle, mit deren Hilfe die Schritte eines Verfahrens nach einem der Ansprüche 1 bis 6 durchführbar sind, wenn das Computerprogramm auf einer programmierbaren Einrichtung, insbesondere auf einem Netzknoten des Telekommunikationsnetzes (100) oder einer Anrufer-Identitäts-Einheit oder -Funktionalität (150), ausgeführt wird.

10. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 9 speichert oder überträgt oder wobei das computerlesbare Medium oder das Datenträgersignal den auf einer programmierbaren Einrichtung, insbesondere auf einem Netzknoten des Telekommunikationsnetzes (100) oder einer Anrufer-Identitäts-Einheit oder - Funktionalität (150), auszuführenden Teil des Computerprogramms nach Anspruch 9 speichert oder überträgt.

## Claims

1. Method for using both a primary telephone number (220) and a secondary telephone number (221) in relation to a subscriber (20) to a telecommunications network (100), the telecommunications network (100) being a mobile communications network, and the primary telephone number (220) and the secondary telephone number (221) being MSISDN telephone numbers,
wherein, by means of the telecommunications network (100), a communication connection can be established between the subscriber (20) and a further subscriber (21), the subscriber (20) and the further subscriber (21) being connected to a core network (120) of the telecommunications network (100) via an access network (110) of the telecommunications network (100),
wherein the telecommunications network (100) has or is connected to or has access to a caller identity unit or caller identity functionality (150),
wherein the method comprises the following steps for establishing a communication connection between the subscriber (20) and the further subscriber (21):
- in a first step, the primary telephone number (220) is used between the subscriber (20) and the caller identity unit or caller identity functionality (150),
- in a second step, the secondary telephone number (221) is used between the further subscriber (21) and the caller identity unit or caller identity functionality (150),
wherein the communication connection is established between the subscriber (20) and the further subscriber (21) in that a call setup is performed at the subscriber (20) or initiated at the subscriber (20), the first telephone number (220) being used initially - during the first step - and the secondary telephone number (221) being used later in time - during the second step - as a caller ID of the subscriber (20) used towards the further subscriber (21), the secondary telephone number (221) being recorded in a home location register, HLR, of an operator of the telecommunications network (100), a further communication connection being established between the subscriber (20) and the further subscriber (21) on the basis of the secondary telephone number (221) recorded in the home location register in the event of a return call from the further subscriber (21).

2. Method according to claim 1, **characterised in that** in the primary and secondary telephone number (220, 221) are assigned to a telecommunications terminal associated with the subscriber or to a subscription of the subscriber (20), in particular the primary telephone number (220) not being passed on to and in particular not being known to the further subscriber (21).

3. Method according to either of the preceding claims, **characterised in that** the caller identity unit or caller identity functionality (150) has a contact book entry in relation to the further subscriber (21), in such a way that, in the event of an outgoing communication connection from the subscriber (20) to the further subscriber (21) using the primary telephone number (220), the secondary telephone number (221) is used instead of the primary telephone number (220), and/or, in the event of an incoming communication connection from the further subscriber (21) to the subscriber (20) using the secondary telephone number (221), the communication connection to the subscriber (20) is established.

4. Method according to any of the preceding claims, **characterised in that** the contact book entry is produced automatically or can be generated manually, in particular a plurality of different secondary telephone numbers being usable for different further subscribers.

5. Method according to any of the preceding claims, **characterised in that** the contact book entry and/or the secondary telephone number (221)
- has a time-limited validity duration, and/or
- is made invalid or placed in an inactive state or is made invalid or placed in an inactive state for a particular, in particular repeating, time period at the initiative of the subscriber (20) and/or at the initiative of the telecommunications network (100), and/or
- is usable or alternatively not usable for communication connections using further telecommunications networks as the telecommunications network (100), in particular for roaming situations, and/or
- is usable only for communication connections for voice connections or else only for communication connections for data connections or for communication connections for both voice and data connections or is usable for communication connections for or using a particular application or group of applications, and/or
- is limited to use by the further subscriber (21) or else by the further subscriber (21) and additionally by one or more other further subscribers, in particular a limited number of other further subscribers, and/or
- is made invalid or placed in an inactive state for use by the further subscribers (21) or by one or more other further subscribers or is made invalid or placed in an inactive state for a particular, in particular repeating, time period at the initiative of the subscriber (20) and/or at the initiative of the telecommunications network (100),
- can still be used for at least one particular further subscriber, at the initiative of the subscriber (20) and/or at the initiative of the telecommunications network (100), in spite of a secondary telephone number (221) or corresponding contact book entry which has been made invalid or placed in an inactive state for use by the further subscriber (21) or one or more other further subscribers.

6. Method according to any of the preceding claims, **characterised in that** the primary telephone number (220) is assigned to the subscriber (20) or to a telecommunications terminal on the basis of a subscription, the primary telephone number (220) being an MSISDN telephone number assigned to the telecommunications terminal (20) and/or to the subscription.

7. Telecommunications network (100) or system for using both a primary telephone number (220) and a secondary telephone number (221) in relation to a subscriber (20) to a telecommunications network (100), the telecommunications network (100) being a mobile communications network, and the primary telephone number (220) and the secondary telephone number (221) being MSISDN telephone numbers, wherein, by means of the telecommunications network (100), a communication connection can be established between the subscriber (20) and a further subscriber (21), the subscriber (20) and the further subscriber (21) being connected to a core network (120) of the telecommunications network (100) via an access network (110) of the telecommunications network (100),
wherein the telecommunications network (100) has or is connected to or has access to a caller identity unit or caller identity functionality (150),
wherein, for establishing a communication connection between the subscriber (20) and the further subscriber (21), the telecommunications network or system is configured in such a way that:
- the primary telephone number (220) is used between the subscriber (20) and the caller identity unit or caller identity functionality (150),
- the secondary telephone number (221) is used between the further subscriber (21) and the caller identity unit or caller identity functionality (150),
wherein the telecommunications network (100) is configured in such a way that - if the communication connection is established between the subscriber (20) and the further subscriber (21) in that a call setup is performed at the subscriber (20) or initiated at the subscriber (20) - the first telephone number (220) is used initially between the subscriber (20) and the caller identity unit or caller identity functionality (150), and the secondary telephone number (221) is used later in time between the caller identity unit or caller identity functionality (150) and the further subscriber (21) as a caller ID of the subscriber (20) used towards the further subscriber (21), the secondary telephone number (221) being recorded in a home location register, HLR, of an operator of the telecommunications network (100), in such a way that a further communication connection is established between the subscriber (20) and the further subscriber (21) on the basis of the secondary telephone number (221) recorded in the home location register in the event of a return call from the further subscriber (21).

8. Caller identity unit or caller identity functionality (150) for use in a telecommunications network (100) or in a system according to claim 7.

9. Computer program comprising commands by means of which the steps of a method according to any of claims 1 to 6 can be carried out when the computer program is run on a programmable device, in particular on a network node of the telecommunications network (100) or a caller identity unit or caller identity functionality (150).

10. Computer-readable medium, provided for storing a computer program, or data carrier signal, provided for transmitting a computer program, wherein the computer-readable medium or data carrier signal stores or transmits the computer program according to claim 9, or wherein the computer-readable medium or data carrier signal stores or transmits the part of the computer program according to claim 9 which is to be run on a programmable device, in particular on a network node of the telecommunications network (100) or a caller identity unit or caller identity functionality (150) .

## Revendications

1. Procédé pour utiliser à la fois un numéro de téléphone primaire (220) et un numéro de téléphone secondaire (221) concernant un abonné (20) d'un réseau de télécommunications (100), dans lequel le réseau de télécommunications (100) est un réseau de communication mobile et le numéro de téléphone primaire (220) et le numéro de téléphone secondaire (221) sont des numéros de téléphone MSISDN, dans lequel une liaison de communication entre l'abonné (20) et un autre abonné (21) peut être établie au moyen du réseau de télécommunications (100), l'abonné (20) et l'autre abonné (21) étant reliés à un réseau central (120) du réseau de télécommunications (100) par un réseau d'accès (110) du réseau de télécommunications (100),
dans lequel le réseau de télécommunications (100) présente ou est relié ou a accès à une unité ou fonctionnalité d'identité d'appelant (150), le procédé d'établissement d'une liaison de communication entre l'abonné (20) et l'autre abonné (21) comprenant les étapes suivantes :
- dans une première étape, le numéro de téléphone primaire (220) est utilisé entre l'abonné (20) et l'unité ou la fonctionnalité d'identité d'appelant (150),
- dans une deuxième étape, le numéro de téléphone secondaire (221) est utilisé entre l'autre abonné (21) et l'unité ou la fonctionnalité d'identité d'appelant (150),
dans lequel l'établissement de la liaison de communication entre l'abonné (20) et l'autre abonné (21) s'effectue par le fait qu'un appel est établi par l'abonné (20) ou déclenché par l'abonné (20), le numéro de téléphone primaire (220) étant utilisé d'abord - pendant la première étape - et le numéro de téléphone secondaire (221) étant utilisé ensuite - pendant la deuxième étape - en tant qu'identifiant d'appelant de l'abonné (20) utilisé vis-à-vis de l'autre abonné (21), le numéro de téléphone secondaire (221) étant enregistré dans un Home Location Register (registre de localisation nominal), HLR, d'un opérateur du réseau de télécommunications (100), une autre liaison de communication étant établie entre l'abonné (20) et l'autre abonné (21) sur la base du numéro de téléphone secondaire (221) enregistré dans le Home Location Register lors d'un rappel de l'autre abonné (21).

2. Procédé selon la revendication 1, **caractérisé en ce que** les numéros de téléphone primaire et secondaire (220, 221) sont associés à un terminal de télécommunication associé à l'abonné ou à un abonnement de l'abonné (20),
dans lequel, le numéro de téléphone primaire (220) n'est en particulier pas transmis à l'autre abonné (21) et en particulier pas connu de celui-ci.

3. Procédé selon l'une des revendications précédentes, **caractérisé en ce que** l'unité ou la fonctionnalité d'identité d'appelant (150) présente, en ce qui concerne l'autre abonné (21), une entrée de répertoire de contacts telle que , que, dans le cas d'une liaison de communication sortante de l'abonné (20) vers l'autre abonné (21) en utilisant le numéro de téléphone primaire (220), le numéro de téléphone secondaire (221) est utilisé à la place du numéro de téléphone primaire (220) et/ou que, dans le cas d'une liaison de communication entrante de l'autre abonné (21) à l'abonné (20) en utilisant le numéro de téléphone secondaire (221), la liaison de communication est établie avec l'abonné (20).

4. Procédé selon l'une des revendications précédentes, **caractérisé en ce que** l'entrée de répertoire de contacts est créée automatiquement ou peut être générée manuellement, une pluralité de numéros de téléphone secondaires différents pouvant en particulier être utilisés pour différents autres abonnés.

5. Procédé selon l'une des revendications précédentes, **caractérisé en ce que** l'entrée de répertoire de contacts et/ou le numéro de téléphone secondaire (221)
- ont une durée de validité limitée dans le temps et/ou
- à l'initiative de l'abonné (20) et/ou à l'initiative du réseau de télécommunications (100), sont invalidés ou mis dans un état inactif ou sont invalidés ou mis dans un état inactif pendant une période déterminée, en particulier répétitive, et/ou
- sont utilisables ou en alternative non utilisables pour des liaisons de communication utilisant d'autres réseaux de télécommunications que le réseau de télécommunications (100), en particulier pour des situations d'itinérance et/ou
- sont utilisables uniquement pour des liaisons de communication concernant des liaisons vocales ou uniquement pour des liaisons de communication concernant des liaisons de données ou pour des liaisons de communication concernant à la fois des liaisons vocales et des liaisons de données ou sont utilisables pour des liaisons de communication concernant ou utilisant une application ou un groupe d'applications déterminé(e) et/ou
- sont limités à l'utilisation par l'autre abonné (21) ou bien par l'autre abonné (21) et en plus un ou plusieurs autres abonnés, en particulier un nombre limité d'autres abonnés, et/ou
- à l'initiative de l'abonné (20) et/ou à l'initiative du réseau de télécommunications (100), sont invalidés ou mis dans un état inactif pour l'utilisation par l'autre abonné (21) ou par un ou plusieurs autres abonnés, ou sont invalidés ou mis dans un état inactif pour une période déterminée, en particulier répétitive, et/ou
- à l'initiative de l'abonné (20) et/ou à l'initiative du réseau de télécommunications (100), malgré un numéro de téléphone secondaire (221) ou une entrée de répertoire de contacts correspondante invalidés ou mis dans un état inactif pour l'utilisation par l'autre abonné (21) ou par un ou plusieurs autres abonnés, ceux-ci sont néanmoins utilisables par au moins un autre abonné déterminé.

6. Procédé selon l'une des revendications précédentes, **caractérisé en ce que** le numéro de téléphone primaire (220) est associé à l'abonné (20) ou à un terminal de télécommunication sur la base d'un abonnement, le numéro de téléphone primaire (220) étant un numéro de téléphone MSISDN associé au terminal de télécommunication (20) et/ou à l'abonnement.

7. Réseau de télécommunications (100) ou système pour utiliser à la fois un numéro de téléphone primaire (220) et un numéro de téléphone secondaire (221) concernant un abonné (20) d'un réseau de télécommunications (100), dans lequel le réseau de télécommunications (100) est un réseau de communication mobile et le numéro de téléphone primaire (220) et le numéro de téléphone secondaire (221) sont des numéros de téléphone MSISDN,
dans lequel une liaison de communication entre l'abonné (20) et un autre abonné (21) peut être établie au moyen du réseau de télécommunications (100), l'abonné (20) et l'autre abonné (21) pouvant être reliés à un réseau central (120) du réseau de télécommunications (100) par un réseau d'accès (110) du réseau de télécommunications (100),
dans lequel le réseau de télécommunications (100) présente ou est relié ou a accès à une unité ou fonctionnalité d'identité d'appelant (150),
dans lequel le réseau de télécommunications ou le système est configuré pour établir une liaison de communication entre l'abonné (20) et l'autre abonné (21) de telle sorte que :
- le numéro de téléphone primaire (220) est utilisé entre l'abonné (20) et l'unité ou la fonctionnalité d'identité d'appelant (150),
- le numéro de téléphone secondaire (221) est utilisé entre l'autre abonné (21) et l'unité ou la fonctionnalité d'identité d'appelant (150),
dans lequel le réseau de télécommunications (100) est configuré de telle sorte que - si l'établissement de la liaison de communication entre l'abonné (20) et l'autre abonné (21) s'effectue par le fait qu'un appel est établi par l'abonné (20) ou déclenché par l'abonné (20) - le numéro de téléphone primaire (220) est utilisé d'abord entre l'abonné (20) et l'unité ou la fonctionnalité d'identité d'appelant (150) et le numéro de téléphone secondaire (221) est utilisé ensuite entre l'unité ou la fonctionnalité d'identité d'appelant (150) et l'autre abonné (21) en tant qu'identifiant d'appelant de l'abonné (20) utilisé vis-à-vis de l'autre abonné (21), le numéro de téléphone secondaire (221) étant enregistré dans un Home Location Register (registre de localisation nominal), HLR, d'un opérateur du réseau de télécommunications (100), de sorte que, lors d'un rappel de l'autre abonné (21), une autre liaison de communication est établie entre l'abonné (20) et l'autre abonné (21) sur la base du numéro de téléphone secondaire (221) enregistré dans le Home Location Register.

8. Unité ou fonctionnalité d'identité d'appelant (150) destinée à être utilisée dans un réseau de télécommunications (100) ou dans un système selon la revendication 7.

9. Programme d'ordinateur comprenant des instructions permettant de mettre en œuvre les étapes d'un procédé selon l'une des revendications 1 à 6, lorsque le programme d'ordinateur est exécuté sur un équipement programmable, en particulier sur un noeud de réseau du réseau de télécommunications (100) ou sur une unité ou fonctionnalité d'identité d'appelant (150).

10. Support lisible par ordinateur, prévu pour stocker un programme d'ordinateur, ou signal de support de données, prévu pour transmettre un programme d'ordinateur, le support lisible par ordinateur ou le signal de support de données stockant ou transmettant le programme d'ordinateur selon la revendication 9, ou le support lisible par ordinateur ou le signal de support de données stockant ou transmettant la partie du programme d'ordinateur selon la revendication 9 à exécuter sur un équipement programmable, en particulier sur un noeud de réseau du réseau de télécommunications (100) ou une unité ou fonctionnalité d'identité d'appelant (150).
